# EUROPEAN PATENT APPLICATION

(11) **EP 4 624 520 A1**
(43) Date of publication of application: **01.10.2025**
(21) Application number: 23935981.3
(22) Date of filing: 08.05.2023
(51) Int. Cl.: C08J 11/28, C08G 59/20

(54) **ESTER-CONTAINING EPOXY CURED PRODUCT AND DEGRADATION METHOD FOR COMPOSITE MATERIAL THEREOF**

(71) Applicant: Swancor Innovation & Incubation Co., Ltd., Nantou City, Nantou County 540028 (TW)
(72) Inventor: WANG, Meng-wei, Nantou City, Nantou 540028 (TW); YANG, Shih-tse, Nantou City, Nantou 540028 (TW); HUANG, Han-sheng, Nantou City, Nantou 540028 (TW)
(74) Representative: Ter Meer Steinmeister & Partner
(86) International application number: PCT/CN2023/092740
(87) International publication number: WO 2024/229652

(57) **Abstract**

An ester-containing epoxy cured product and a degradation method for a composite material thereof. The degradation method for the ester-containing epoxy cured product comprises a mixing step and a degradation step; the mixing step is to mix an ester-containing epoxy cured product with aliphatic amines to form a degradation system; and the degradation step is to place the degradation system at a degradation temperature to degrade the ester-containing epoxy cured product. In this way, a low carbon aliphatic amine compound is used as a degradation liquid to decompose an ester-containing epoxy cured product at a low temperature, thereby achieving the objective of degradation without energy consumption.

## Description

### Technical Field

The present disclosure relates to a method for degrading an ester group-containing epoxy cured product and a composite thereof, particularly a method for degrading an ester group-containing epoxy cured product and a composite thereof which may be performed at low temperature.

### Description of Related Art

Epoxy resin materials offer advantages such as low viscosity and good operability before curing, along with excellent thermal stability, mechanical strength, and chemical resistance after curing. As a result, these materials are widely used in diverse applications, including fiber composites that require high strength and low weight. However, due to their characteristic tendency toward chemical cross-linking, thermosetting materials are non-reprocessable, making these materials difficult to recycle or reuse after disposal. With growing environmental awareness in recent years, the disposal of such waste has gained increasing attention and has become a major concern in the development of composites.

In addition, once cured, epoxy resin forms a stable network of covalent bonds, making it difficult to decompose or recycle through chemical degradation. Therefore, to enable easier recycling following product disposal, the introduction of easily cleavable bonds into the epoxy structure has become a major focus of research in academia and industry.

Currently, one research team has introduced a carbonate ester group into the main chain of epoxy resin and found that the resulting cured product can be completely degraded with hexylamine at high temperature (125°C). Another research team has derivatively synthesized an active ester hardener from waste polycarbonate. When curing with the active ester hardener, the epoxy resin cured product is able to be degraded with hexylamine at high temperature. These findings suggest that epoxy cured products containing ester groups can be recycled through aminolysis. However, high temperature degradation has the drawback of significant energy consumption.

In light of this, finding a suitable amine-based degradation solution that allows ester group-containing epoxy cured products to degrade without heating, and thus without energy consumption, has become a key objective for researchers and industry professionals.

### SUMMARY

An object of the present disclosure is to provide a method for degrading an ester group-containing epoxy cured product and a composite thereof, wherein an aliphatic amine compound having a low carbon number is used as a degradation solution to decompose the ester group-containing epoxy cured product at low temperature.

One embodiment of the present disclosure provides a method for degrading an ester group-containing epoxy cured product, which includes performing a mixing step and performing a degradation step. The mixing step includes mixing the ester group-containing epoxy cured product with an aliphatic amine to form a degradation system. The degradation step includes placing the degradation system at a degradation temperature to degrade the ester group-containing epoxy cured product.

According to the method for degrading the ester group-containing epoxy cured product described herein, the aliphatic amine may be a diamine having a carbon number of 2 to 5 or an amylamine.

According to the method for degrading the ester group-containing epoxy cured product described herein, an ester group in the ester group-containing epoxy cured product may be an ester group, a carbonate ester group, or a urethane ester group.

According to the method for degrading the ester group-containing epoxy cured product described herein, the ester group-containing epoxy cured product may be obtained by curing an epoxy compound including an ester group with a hardener.

According to the method for degrading the ester group-containing epoxy cured product described herein, the ester group in the epoxy compound including the ester group may be an ester group, a carbonate ester group, or a urethane ester group.

According to the method for degrading the ester group-containing epoxy cured product described herein, the hardener may be one or a mixture of two or more selected from an amine hardener, a phenol hardener, an acid anhydride hardener, and an ester hardener.

According to the method for degrading the ester group-containing epoxy cured product described herein, the ester group-containing epoxy cured product may be obtained by curing an epoxy compound with an acid anhydride hardener or an ester hardener.

According to the method for degrading the ester group-containing epoxy cured product described herein, the ester group-containing epoxy cured product may be obtained by epoxy self-curing an epoxy compound including an ester group while being catalyzed by an acid catalyst or a-base catalyst.

According to the method for degrading the ester group-containing epoxy cured product described herein, the degradation temperature may range from 10°C to 50°C.

Another embodiment of the present disclosure provides a method for degrading an ester group-containing epoxy cured product composite, which includes performing a mixing step and performing a degradation step. The mixing step includes mixing the ester group-containing epoxy cured product composite with an aliphatic amine to form a degradation system. The degradation step includes placing the degradation system at a degradation temperature to degrade the ester group-containing epoxy cured product composite to form a degraded product, and filtering the degraded product to separate a polyol oligomer and a fiber.

According to the method for degrading the ester group-containing epoxy cured product composite described herein, the aliphatic amine may be a diamine having a carbon number of 2 to 5 or an amylamine.

According to the method for degrading the ester group-containing epoxy cured product composite described herein, an ester group in the ester group-containing epoxy cured product composite may be an ester group, a carbonate ester group, or a urethane ester group.

According to the method for degrading the ester group-containing epoxy cured product composite described herein, the degradation temperature may range from 10°C to 50°C.

Accordingly, the present disclosure primarily employs an amine compound having a low carbon number and immerses an ester group-containing epoxy cured product in the amine compound, such that aminolysis reaction can occur without requiring a high temperature environment, thereby enabling decomposition of the ester group-containing epoxy cured product.

### BRIEF DESCRIPTION OF THE DRAWINGS

In order to make the above and other objects, features, advantages and examples of the present disclosure more apparent and easily understood, the accompanying drawings are described below:
Fig. 1 is a flow chart depicting the steps of a method for degrading an ester group-containing epoxy cured product according to one embodiment of the present disclosure.
Fig. 2 is a flow chart depicting the steps of a method for degrading an ester group-containing epoxy cured product composite according to another embodiment of the present disclosure.

### [DENOTATION OF MAIN REFERENCE NUMERALS]

100: method for degrading ester group-containing epoxy cured product
200: method for degrading ester group-containing epoxy cured product composite
110,120,210,220: step

### DETAILED DESCRIPTION

Various embodiments of the present disclosure will be described in greater detail below. However, these embodiments represent applications of inventive concepts and may be implemented in various specific forms. The specific embodiments are provided for illustrative purposes only, and are not intended to limit the scope of the present disclosure.

### <Method for Degrading Ester Group-Containing Epoxy Cured Product>

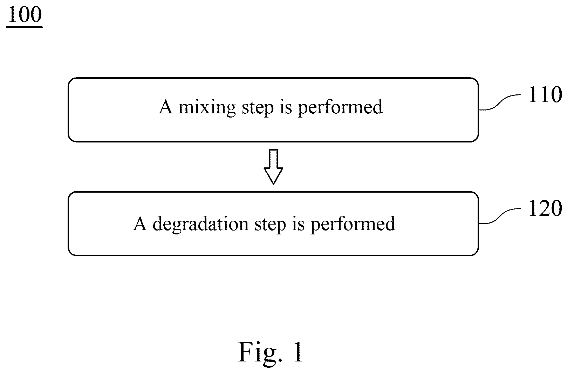

Referring to Fig. 1, Fig. 1 is a flow chart depicting the steps of a method for degrading an ester group-containing epoxy cured product 100 according to one embodiment of the present disclosure. In Fig. 1, the method for degrading the ester group-containing epoxy cured product 100 includes Step 110 and Step 120.

Step 110 is to perform a mixing step of mixing the ester group-containing epoxy cured product with an aliphatic amine to form a degradation system, wherein the aliphatic amine may be a diamine having a carbon number of 2 to 5 or an amylamine. The diamine having the carbon number of 2 to 5 may be, for example, ethylenediamine, propylenediamine, butanediamine (1,4-butanediamine) or pentanediamine (1,5-pentanediamine). Specifically, the ester group in the ester group-containing epoxy cured product may be an ester group (ester), a carbonate ester group (carbonate), or a urethane ester group (urethane).

In particular, the ester group-containing epoxy cured product may be obtained by curing an epoxy compound including an ester group with a hardener, wherein the ester group in the epoxy compound including the ester group may be an ester group, a carbonate ester group, or a urethane ester group, and the hardener may be one or a mixture of two or more selected from an amine hardener, a phenol hardener, an acid anhydride hardener, and an ester hardener. Alternatively, the ester group-containing epoxy cured product may be obtained by curing an epoxy compound with an acid anhydride hardener or an ester hardener, wherein the aforementioned epoxy compound is a general epoxy resin, such as bisphenol A epoxy resin (diglycidyl ether of bisphenol A, DGEBA), bisphenol F epoxy resin (diglycidyl ether of bisphenol F, DGEBF), phenolic type epoxy resin (phenol novolac epoxy, PNE), methyl phenolic epoxy resin (cresol novolac epoxy, CNE), dicyclopentadiene-phenol epoxy resin (DNE), naphthalene-containing epoxy resin, phosphorus-containing epoxy resin, or a mixture thereof. Alternatively, the ester group-containing epoxy cured product may also be obtained by epoxy self-curing an epoxy compound including the ester group while being catalyzed by an acid catalyst or a base catalyst.

Step 120 is to perform a degradation step of placing the degradation system at a degradation temperature to degrade the ester group-containing epoxy cured product, wherein the degradation temperature may range from 10°C to 50°C, better 20°C to 40°C, so as to keep the ester group-containing epoxy cured product at low temperature for degradation.

### <Method for Degrading Ester Group-Containing Epoxy Cured Product Composite>

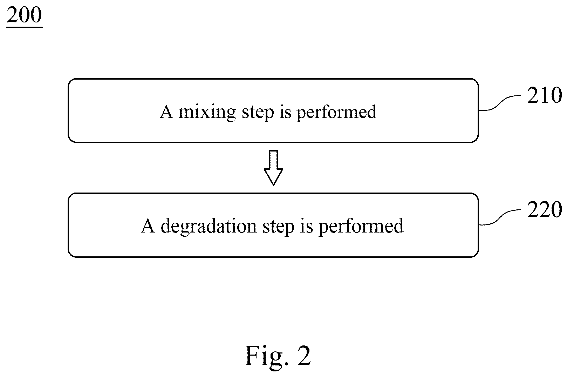

Referring to Fig. 2, Fig. 2 is a flow chart depicting the steps of a method for degrading an ester group-containing epoxy cured product composite 200 according to another embodiment of the present disclosure. **In** Fig. 2, the method for degrading the ester group-containing epoxy cured product composite 200 includes Step 210 and Step 220.

Step 210 is to perform a mixing step of mixing the ester group-containing epoxy cured product composite with an aliphatic amine to form a degradation system, wherein the aliphatic amine may be a diamine having a carbon number of 2 to 5 or an amylamine. Specifically, the ester group in the ester group-containing epoxy cured product composite may be an ester group (ester), a carbonate ester group (carbonate), or a urethane ester group (urethane).

In particular, the ester group-containing epoxy cured product composite may be obtained by combining an ester group-containing epoxy resin composition with a fiber through a composite process conducted at either room temperature or high temperature. The composite formation process may include, but is not limited to, a pultrusion process, a vacuum infusion process, a compression molding process, or a prepreg molding process. **The** fiber may include, but is not limited to, glass fiber, carbon fiber, flax fiber, polyamide fiber, or a mixture thereof.

Step 220 is to perform a degradation step of placing the degradation system at a degradation temperature to degrade the ester group-containing epoxy cured product composite to form a degraded product, and filtering the degraded product to separate a polyol oligomer and a fiber, wherein the degradation temperature may range from 10°C to 50°C, better 20°C to 40°C, so as to keep the ester group-containing epoxy cured product composite at low temperature for degradation, and to achieve the recycling mechanism of separating the fiber and the organic substance.

Thus, according to the present disclosure, an aliphatic amine monomer having a low carbon number is used as a degradation solution. The ester group-containing epoxy cured product is immersed in the degradation solution and can be degraded at room temperature, thereby achieving decomposition of the ester group-containing epoxy cured product under non-high-temperature conditions, or even without energy-consuming heating. This addresses the challenges of epoxy waste recycling while also contributing to energy conservation and carbon reduction.

The present disclosure is further illustrated by the following embodiments, which enable those skilled in the art to fully utilize and practice the present disclosure without excessive interpretation and/or undue experimentation. These embodiments are provided for illustrative purposes only and are not intended to limit the scope of the present disclosure, but rather to demonstrate how the materials and methods disclosure herein may be implemented.

### <Synthesis Examples>

Synthesis Example 1: 2 g of epoxy resin DPCEP2 containing the ester groups (epoxy equivalent of 483 g/eq) and 0.26 g of hardener Jeffamine D230 (purchased from Huntsman, active hydrogen equivalent of 62 g/eq) were placed in an aluminum pan and mixed evenly, and then placed in an oven at 70°C for curing for 6 hours to obtain the ester group-containing epoxy cured product of Synthesis Example 1.

Synthesis Example 2: 2 g of epoxy resin DPCEP2 containing the ester groups (epoxy equivalent of 483 g/eq), 0.69 g of methyltetrahydrophthalic anhydride (MTHPA, purchased from NEUTO CHEMICAL CORP., reaction equivalent of 166.2 g/eq) and 0.004 g (0.2 wt% of epoxy resin) of 2-methylimidazole were placed in an aluminum pan and mixed evenly, and then placed in an oven at 120°C for curing for half an hour, and 150°C curing for another 1 hour to obtain the ester group-containing epoxy cured product of Synthesis Example 2.

Synthesis Example 3: 2 g of diglycidyl ether of bisphenol A (obtained from CHANG CHUN PLASTICS CO., LTD., product code BE188, epoxy equivalent of 185 g/eq), 1.80 g of methyltetrahydrophthalic anhydride (MTHPA, purchased from NEUTO CHEMICAL CORP., reaction equivalent of 166.2 g/eq) and 0.004 g (0.2 wt% of epoxy resin) of 2-methylimidazole were placed in an aluminum pan and mixed evenly, and then placed in an oven at 120°C for curing for half an hour, and 150°C curing for another 1 hour to obtain the ester group-containing epoxy cured product of Synthesis Example 3.

Synthesis Example 4: 2 g of diglycidyl ether of bisphenol A (obtained from CHANG CHUN PLASTICS CO., LTD., product code BE188, epoxy equivalent of 185 g/eq), 1.37 g of polycarbonate (purchased from CHIMEI Corporation, product code PC-122, reaction equivalent of 127 g/eq) and 0.004 g (0.2 wt% of epoxy resin) of 2-methylimidazole were placed in an aluminum pan and melt mixed, and then placed in an oven at 175°C for curing for half an hour to obtain the ester group-containing epoxy cured product of Synthesis Example 4.

Synthesis Example 5: 2 g of diglycidyl ether of bisphenol A (obtained from CHANG CHUN PLASTICS CO., LTD., product code BE188, epoxy equivalent of 185 g/eq) and 0.67 g of hardener Jeffamine D230 (purchased from Huntsman, active hydrogen equivalent of 62 g/eq) were placed in an aluminum pan and mixed evenly, and then placed in an oven at 70°C for curing for 6 hours to obtain the epoxy cured product of Synthesis Example 5.

Synthesis Example 6: 2 g of epoxy resin DPCEP2 containing the ester groups (epoxy equivalent of 483 g/eq) and 0.004 g (0.2 wt% of epoxy resin) of 2-methylimidazole were placed in an aluminum pan and mixed evenly, and then placed in an oven at 120°C for curing for half an hour, and 150°C curing for another 1 hour to obtain the ester group-containing epoxy cured product of Synthesis Example 6.

In addition, depending on different process operation requirements, the epoxy resin compositions described in the aforementioned Synthesis Example 1 to Synthesis Example 6 may be formulated to achieve a suitable gelation time for fiber impregnation molding at room temperature. Subsequently, a baking process may be performed under the curing conditions specified in each synthesis example to obtain ester group-containing epoxy cured product composites containing fibers.

### <Examples/Comparative Examples>

Example 1 to Example 5: 1 gram of the ester group-containing epoxy cured products of Synthesis Example 1 to Synthesis Example 4 and Synthesis Example 6 were immersed in 10 mL of pentanediamine, respectively, and the degradation behaviors were observed at room temperature.

Comparative Example 1: 1 gram of the epoxy cured product of Synthesis Example 5 was immersed in 10 mL of pentanediamine, and the degradation behavior was observed at room temperature.

Comparative Example 2: 1 gram of the ester group-containing epoxy cured product of Synthesis Example 1 and 10 grams of hexamethylenediamine were used. However, the hexamethylenediamine solidified at room temperature and could not be mixed uniformly. Therefore, the mixture was placed in an oven at 60°C to melt the hexamethylenediamine, and degradation behavior was observed by maintaining the system at 60°C.

Comparative Example 3: 1 gram of the ester group-containing epoxy cured product of Synthesis Example 1 was immersed in 10 mL of hexylamine, and the degradation behavior was observed at room temperature.

Comparative Example 4: 1 gram of the ester group-containing epoxy cured product of Synthesis Example 1 was immersed in 10 mL of triethylenetetramine, and the degradation behavior was observed at room temperature.

Comparative Example 5: 1 gram of the ester group-containing epoxy cured product of Synthesis Example 1 was immersed in 10 mL of triethylenetetramine and the degradation behavior was observed at 135°C.

### <Degradation Behavior Assessment>

The degradation temperatures, degradation times and residual weights of Example 1 to Example 5 and Comparative Example 1 to Comparative Example 5 are listed in Table 1, as shown below.

| Table 1 | | | |
|---|---|---|---|
| | Degradation temperature (°C) | Degradation time (hr) | Residual weight (%) |
| Example 1 | 25°C | 72 | 0 |
| Example 2 | 25°C | 48 | 0 |
| Example 3 | 25°C | 62 | 0 |
| Example 4 | 25°C | 65 | 0 |
| Example 5 | 25°C | 40 | 0 |
| Comparative Example 1 | 25°C | 168 | >99 |
| Comparative Example 2 | 60°C | 72 | 89 |
| Comparative Example 3 | 25°C | 168 | 96 |
| Comparative Example 4 | 25°C | 168 | 98 |
| Comparative Example 5 | 135°C | 12 | 0 |

From the results in Table 1, it can be seen that Example 1 to Example 5 were all completely degraded by pentanediamine at room temperature of 25°C. Example 2 and Example 5, which had higher proportions of ester groups in the epoxy cured product, exhibited the best degradation efficiency. In contrast, Comparative Example 1, in which the epoxy cured product contained no ester group, shows no significant change after immersion in pentanediamine at room temperature for 7 days.

In Comparative Example 2, pentanediamine was replaced with hexamethylenediamine. However, since hexamethylenediamine changes from liquid to solid at room temperature, degradation at room temperature was difficult. After heating the Comparative Example 2 system to 60°C to melt the hexamethylenediamine, it can be found that even though Comparative Example 2 is immersed at a temperature higher than room temperature, the degradation effect after 3 days of immersion was still markedly inferior to that of Example 1 immersed at room temperature. In addition, in Comparative Example 3, hexamethylenediamine was replaced with hexylamine, which is liquid at room temperature. The degradation effect after 7 days of immersion at room temperature was minimal. This indicates that increasing the carbon number of the amine compound negatively affects overall low-temperature degradation efficiency.

In Comparative Example 4, pentanediamine was replaced with multifunctional triethylenetetramine. The degradation effect at room temperature remained limited, and the result obtained after 7 days of immersion was unsatisfactory. In Comparative Example 5, the temperature was raised to 135°C. Under these conditions, an excellent degradation effect was observed, with complete degradation occurring within approximately 12 hours. This is consistent with the existing knowledge that amine compounds can promote ester aminolysis at elevated temperatures, while exhibiting extremely low reactivity at low temperature. Even when using multifunctional amines with higher alkalinity, achieving low-temperature degradation remains challenging. Therefore, the alkalinity of the amine compound is not the determining factor for successful degradation at room temperature.

In summary, when an aliphatic amine compound having a low carbon number is used as the degradation solution according to the present disclosure, it facilitates the penetration of the degradation solution into the ester group-containing epoxy cured product. As a result, the ester group-containing epoxy cured product can be decomposed under low-temperature conditions, thereby overcoming the need for high-temperature processes (>100°C). This addresses a long-standing challenge in the prior art and provides a low-energy recycling route for ester group-containing epoxy cured products.

Although the present disclosure has been described in connection with specific embodiments, it is not intended to be limited thereto. Various modifications and changes may be made by those skilled in the art without departing from the spirit and scope of the present disclosure. Accordingly, the scope of protection should be defined by the appended claims.

## Claims

1. A method for degrading an ester group-containing epoxy cured product, **characterized in** comprising:
performing a mixing step of mixing the ester group-containing epoxy cured product with an aliphatic amine to form a degradation system; and
performing a degradation step of placing the degradation system at a degradation temperature to degrade the ester group-containing epoxy cured product.

2. The method for degrading the ester group-containing epoxy cured product of claim 1, **characterized in that**, the aliphatic amine is a diamine having a carbon number of 2 to 5 or an amylamine.

3. The method for degrading the ester group-containing epoxy cured product of claim 1, **characterized in that**, an ester group in the ester group-containing epoxy cured product is an ester group, a carbonate ester group, or a urethane ester group.

4. The method for degrading the ester group-containing epoxy cured product of claim 1, **characterized in that**, the ester group-containing epoxy cured product is obtained by curing an epoxy compound comprising an ester group with a hardener.

5. The method for degrading the ester group-containing epoxy cured product of claim 4, **characterized in that**, the ester group in the epoxy compound comprising the ester group is ester group, a carbonate ester group, or a urethane ester group.

6. The method for degrading the ester group-containing epoxy cured product of claims 4 or 5, **characterized in that**, the hardener is one or a mixture of two or more selected from an amine hardener, a phenol hardener, an acid anhydride hardener, and an ester hardener.

7. The method for degrading the ester group-containing epoxy cured product of claim 1, **characterized in that**, the ester group-containing epoxy cured product is obtained by curing an epoxy compound with an acid anhydride hardener or an ester hardener.

8. The method for degrading the ester group-containing epoxy cured product of claim 1, **characterized in that**, the ester group-containing epoxy cured product is obtained by epoxy self-curing an epoxy compound comprising an ester group while being catalyzed by an acid catalyst or a base catalyst.

9. The method for degrading the ester group-containing epoxy cured product of claim 1, **characterized in that**, the degradation temperature is from 10°C to 50°C.

10. A method for degrading an ester group-containing epoxy cured product composite, **characterized in** comprising:
performing a mixing step of mixing the ester group-containing epoxy cured product composite with an aliphatic amine to form a degradation system; and
performing a degradation step of placing the degradation system at a degradation temperature to degrade the ester group-containing epoxy cured product composite to form a degraded product, and filtering the degraded product to separate a polyol oligomer and a fiber.

11. The method for degrading the ester group-containing epoxy cured product composite of claim 10, **characterized in that**, the aliphatic amine is a diamine having a carbon number of 2 to 5 or an amylamine.

12. The method for degrading the ester group-containing epoxy cured product composite of claim 10, **characterized in that**, an ester group in the ester group-containing epoxy cured product composite is an ester group, a carbonate ester group, or a urethane ester group.

13. The method for degrading the ester group-containing epoxy cured product composite of claim 10, **characterized in that**, the degradation temperature is from 10°C to 50°C.
